# EUROPEAN PATENT SPECIFICATION

(11) **EP 2 855 986 B1**
(45) Date of publication and mention of the grant of the patent: **22.03.2017**
(21) Application number: 13729507.7
(22) Date of filing: 24.05.2013
(51) Int. Cl.: F16K 11/07, F16K 31/06

(54) **SOLENOID VALVE WITH MANUAL OVERRIDE AND SEALING ADAPTER**
MAGNETVENTIL MIT MANUELLER ÜBERSTEUERUNG UND DICHTUNGSADAPTER
VANNE ÉLECTROMAGNÉTIQUE AYANT UN DISPOSITIF DE NEUTRALISATION MANUEL ET UN ADAPTATEUR D'ÉTANCHÉITÉ

(30) Priority: 25.05.2012 NL 2008884
(43) Date of publication of application: 08.04.2015
(73) Proprietor: ASCO CONTROLS B.V., 3925 BD Scherpenzeel (NL)
(72) Inventor: Van Schijndel,, Stefanus Theodorus Maria, NL-3956 KG Leersum (NL); BAKKER, Henk, NL-6665 GS Driel (NL); KULKARNI, Ashish Moreshwar, Pune 411009 (IN)
(74) Representative: EP&C
(86) International application number: PCT/NL2013/050376
(87) International publication number: WO 2013/176547

(56) References cited:
- DE-A1- 4 343 879
- DE-U1-202010 017 049
- US-A- 2 695 154
- US-A- 4 574 843
- US-A- 4 679 017

## Description

The invention relates to a solenoid valve comprising a valve poppet which is controllably moveable under the influence of electromagnetic forces, which valve further comprises a manual override functionality, also referred to as a mechanical override functionality, via which the valve poppet can be moved towards a desired position independent of any possible electromagnetic forces acting upon the valve poppet at the same time.

Such solenoid valves with mechanical or manual overrides are already known in a number of variants. The overrides are mostly formed by some kind of operating pin which, from a position outside the valve housing, can be manually pushed inwards in order to displace the valve poppet towards another aimed position. Thus the override functionality can be used to override the operation of the solenoid(s). This may be beneficial when a machine is being installed which comprises one or more of such solenoid valves, because the override then makes it possible to perform certain control activities and adjustments to the machine and in particular to the solenoid valve(s) thereof. After the machine has been properly tuned, the overrides are no longer immediately necessary and it is even often required to have them removed or at least inactivated in such a way that they can not be tempered with by unauthorized personnel.

US-4,574,843 shows a solenoid valve with a spring centred valve poppet which is moveably guided in two opposite longitudinal directions inside a bore of a valve housing. At both ends of the housing electrically operable solenoid means are provided. Each solenoid means comprises a pole body mounted fixedly against the housing. Through the pole body a pin is moveably guided in the longitudinal direction. The pin at one side lies against the valve poppet. A tubular sleeve is connected at one side to the pole body by means of a quenching operation. At the other side the sleeve is connected to a so-called tail piece also by means of a quenching operation. Through the sleeve an armature of the solenoid means is moveably guided back and forth. The armature lies against the pin and, upon operation of the solenoid means, the armature is able to move the pin in the longitudinal direction and have it push against the valve poppet. Override cartridges are screwed into the tail pieces with O-rings being placed in between as sealing means. Each override cartridge comprises an outwardly threaded body with a central bore which forms a cylinder inside which an operating piston is movably guided. The piston is provided with a circumferential groove in which an O-ring as sealing means is placed. At its inward end the piston is provided with a thickened head which forms a blocking means in the outward direction because it is too big to enter the cylinder. The piston can be manually pushed inwards into the direction of the armature. This can be done from outside the cartridge, for example by means of a pointed tool. Thus it is possible to push the armature forward together with the pin and valve poppet independent of a possible simultaneous operation of the solenoid means.

Both override cartridges can be quickly removed from the valve by unscrewing them out of their respective tail pieces. Subsequently they can be replaced by suitable sealing plugs being screwed into the tail pieces. Thus the override functionalities can truly be eliminated from the valves such that from that moment on the valves can no longer be tempered with or accidentally operated.

A disadvantage with this known valve construction with override functionality is that the connections between the valve and the overrides are complex, vulnerable to damage and expensive. Furthermore the removal of the overrides also means that medium which at that moment is present inside the valve can immediately start to leak out. This makes it impossible to remove the overrides as long as the valve is still under pressure and filled with pressurized medium, because then the medium would start to spout out of the tail pieces. Also the pressure then could cause the override to be forcefully launched away as soon as its connection is unscrewed far enough. This could even lead to a risk of serious injury to the person standing in front of the valve. In most cases this shall mean that a machine of which the valves form part, first needs to be shut down, and the valves be depressurized, before it is possible to safely remove the overrides from its solenoid valve. Subsequently the overrides then need to be replaced while the machine is still shut down and the valve is still depressurized, by suitable caps which are capable to prevent leakage such that the machine can be started again including a placing of the valve under pressure again.

DE-20 2010 017 049-U1 shows a solenoid valve which at its lower side has a slidable valve. Above this valve a magnet piston is provided. This magnet piston is actuable by means of feeding electricity to a spool. Between the magnet piston and the valve a pen is provided. The valve is biased upwards by means of a spring. Above the magnet spool and magnet piston a socket is provided inside which a plug for feeding electricity to the spool can be inserted. Instead of a plug it is also possible to connect a manual operating means to the socket. The manual operating means comprises an operating pin which can be pressed downwards. At its lower end the operating pin lies against an intermediate operator organ. This intermediate operator organ is guided sealing inside the magnet piston. In an upper position of the magnet piston, the intermediate operator organ abuts at its lower end immediately against the magnet piston. If the operating pin is pressed downwards then this pushes the intermediate operator organ downwards together with the magnet piston, which in turn pushes the valve downwards via the pen.

A disadvantage with this known valve construction is that it is somewhat inflexible in use. For example it can only be manually operated after it has been disconnected from the operating system, that is to say after the plug for feeding electricity to the spool has been removed from out of the socket. Only then the operator is able to connect the manual operating means to the valve and have its operating pin lie effective against the intermediate operator organ. This however makes it impossible to let the valve remain having its full electronic solenoid functionality when wanting to manually operate it. An operator truly has to choose to either operate the valve manually either electronically. Both at the same time is not possible. This also means that the manual operating means are unable to manually override or reset the solenoid means while the solenoid means are kept or starting to get energized with electricity.

Another disadvantage is that this known valve construction cannot be equipped with an explosion resistant housing for the spool of the solenoid means. This is caused by the presence of the removable plug-socket connection with the access to the intermediate operator organ directly underneath it. Making the spool housing fully closed and impenetrable for explosive gaseous media, thus is not possible.

Yet another disadvantage is that the intermediate operator organ of this known valve construction is guided inside a part that is movable itself, that is to say inside the magnet piston. This makes the construction complex, particularly because additional measures need to be taken to prevent pressurized media inside the valve to start flowing out. The guiding of the intermediate operator organ inside the magnet piston also makes the valve construction relative heavy to be manually operated, since this requires the magnet piston to be pressed inwards together with the operating pin and intermediate operator organ.

The invention aims to overcome the abovementioned disadvantages at least partly and/or to provide a usable alternative. In particular the invention aims to provide a solid and user-friendly override functionality for a solenoid valve which can be used during test phase of a machine and which can be easily and quickly removed afterwards before switching to an operational phase under all kinds of circumstances, including circumstances that the valve is still in operation and/or under pressure.

This aim is achieved by a solenoid valve according to claim 1. The valve comprises a main valve housing with at least an inlet and outlet port and a bore extending there between. A valve poppet is moveably guided in a longitudinal direction within the bore to control medium flow between the ports through the valve. The valve further comprises electrically operable solenoid means associated with the valve poppet for moving the valve poppet within the bore in dependence of electricity being fed to the solenoid means. A manual override is provided for offering the ability to override the electrically operable solenoid means by manually moving the valve poppet in the longitudinal direction within the bore independent of the solenoid means. For this the manual override comprises an override housing part within which a manually operable operator organ is moveably guided while at the same time moving the valve poppet along with it in the longitudinal direction. According to the invention an adapter is provided between the manual override and the valve poppet. This adapter comprises an adapter housing part which delimits an adapter cylinder part within which an intermediate operator organ is moveably guided. The adapter housing part connects sealing to the main valve housing while at the same time the bore is in flow communication with the adapter cylinder part. The override housing part is connected by means of a removable connection to the adapter housing part. The manually operable operator organ, the intermediate operator organ and the valve poppet are associated to each other such that a manual operation of the manually operable operator organ causes the intermediate operator organ to move the valve poppet in the longitudinal direction to another position inside the bore independent of the solenoid means. First sealing means, like for example a rubber ring, are provided between the intermediate operator organ and the adapter cylinder part for preventing medium to flow out of the valve via the adapter. The adapter housing part is a separate distinctive part which is connected by means of a removable connection to the main valve housing, with second sealing means, like for example a rubber ring, being provided between the adapter housing part and the main valve housing.

Thus a solenoid valve is obtained with a solid and constructional simple override functionality. The big advantage is that owing to the provision of the adapter, the override can be easily and reliably used during the start-up/test phase of a machine in which the valve is present, while as soon as the machine is started-up and properly tuned, and the manual override function is not required anymore or even not allowed anymore, it can be removed under process pressure situation, without causing any leakage or any other process interruptions. The adapter then is well able to keep the valve sealed at that position. Adding of a plug or other kind of cap is no longer necessary to prevent leakage. By constructing the adapter as a separate part it can more easily be kept multifunctional for all kinds of valve types. Also this makes it possible to add it more easily to already existing valve designs and replace it if other kinds of connections are required and/or other kinds of overrides are to be coupled thereto.

The removable connection between the adapter housing part and the main valve housing preferably is a screw connection. This makes it possible to quickly and reliably connect the two parts together. The connection between the adapter housing part and the main valve housing can however also be of other types, like for example a pin-groove, bayonet or snap connection. It may also make use of separate connection elements like bolts.

In an advantageous embodiment the removable connection between the override housing part and the adapter housing part is chosen complementary to the removable connection between the adapter housing part and the main valve housing. This makes it possible to first mount the adapter housing part thereto or to leave it behind and directly mount the override housing part to the main valve housing. In this way it gives an engineer the full freedom to make use of the adapter or not. Also it makes it possible to start mounting the adapter in between already existing connections between solenoid valves and overrides.

In a preferred embodiment the intermediate operator organ comprises an adapter piston part complementary to the adapter cylinder part. This makes it possible for the piston part to easily slide into and out of the cylinder part without running a risk of slanting or tilting because of a substantially play free receiving of the piston part inside the cylinder part. In order to further improve the sealing between the piston part and the cylinder part the adapter piston part or the adapter cylinder part may comprise a circumferential groove inside which the first sealing means are placed.

In order to prevent the intermediate operator organ to be pressed out of the adapter housing part because of medium pressure inside the valve, it preferably comprises blocking means for blocking an outward movement away from the valve poppet relative to the adapter housing part. The blocking means may for example be formed by inwardly and/or outwardly projecting flange parts of the adapter housing part and intermediate operator organ respectively which form cooperating abutting surfaces of the intermediate operator organ and the adapter housing part. Instead of the cooperating abutting surfaces forming integral parts of the adapter housing part and intermediate operator organ, they can also be formed by one or more retainers mounted thereto.

Although no longer necessary, a plug may still be provided which is connectable by means of a connection to the adapter housing part after the override has been removed. The plug may then prevent dirt accumulation or intrusion at the location of the adapter and/or attempts to still try to temper with the valve via the adapter.

By choosing the connection between the plug and the adapter housing part complementary to the removable connection between the override housing part and the adapter housing part, effective use can be made of those connection means and no separate connection needs to be provided.

Medium pressure inside the valve and/or a spring present inside the valve can be used to let the intermediate and manually operable operator organs move back to their original starting positions after the override has been operated and released again. In addition or in the alternative the intermediate operator organ can be biased inside the adapter housing part by means of a spring, particularly in a direction away from the solenoid means and the valve poppet. Thus the reliability of the adapter gets higher and it can be guaranteed that the intermediate operator organ is always automatically pushed back towards its starting position. No medium pressure or valve spring is necessary for this.

The solenoid means can be positioned at a first side of the valve poppet, while the adapter and override are provided at a second side of the valve poppet opposite to the solenoid means, seen in the longitudinal direction. This advantageously makes it possible to use all kinds of solenoid means, like ones with external connectors, fixed cable-wiring, and/or solenoid means having an explosion-free housing.

In the alternative or in addition the manually operable operator organ of the override can also be biased inside the override housing part by means of a spring. If a spring is provided inside the adapter then this spring may make the use of a spring inside the override unnecessary. For some types of manually operable operator organs, like ones that have to be pressed inwardly, it may be advantageous to use the combination of an adapter with spring and an override without spring, since otherwise it may get too hard for an operator to manually operate the assembly of override, adapter and valve. For other types of manually operable operator organs like ones that have to be screwed/rotated inwardly, it does not have to be a problem if the override is also provided with a spring.

In an embodiment the solenoid means may be designed just strong enough or be fed with just enough electricity for being able to set or reset the valve poppet in an aimed end position only after it first has been manually moved from out of its starting position towards its aimed end position by a manual operation of the override. With just strong enough or fed with just enough electricity it is meant that the solenoid means under those conditions are unable to entirely by themselves be able to move the valve poppet from out of its starting position into its aimed end position. This advantageously makes it possible to also start using the override functionality as a manual (re)set option. In such a manual (re)set, the valve poppet then always first needs to be manually moved by operation of the override from out of its starting position towards its aimed end position before the solenoid means are able to keep the valve poppet in this aimed end position when energized. The operation of the override can then be stopped. Thus it can be guaranteed that an operator cannot accidentally switch the valve on or off merely by means of its electronic operating system. He always needs to perform a simultaneous or subsequent manual operation to the valve at the location of the valve itself. According to the invention, the valve can already be placed under pressure or be kept pressurized during this setting or resetting operation. The adapter advantageously shall keep on preventing any pressurized media to leak out at that side of the valve.

Further preferred embodiments of the solenoid valve are stated in the dependent sub claims.

The invention also relates to a method for installing a machine which is equipped with at least one solenoid valve according to one of the preceding claims.

The invention shall be explained below in more detail with reference to the accompanying drawings, wherein:
Fig. 1 a shows a cross sectional view of a preferred embodiment of the solenoid valve according to the invention;
Fig. 1b shows a cross sectional view of a preferred embodiment of the solenoid valve according to the invention without override;
Fig. 1c shows a cross sectional view of a preferred embodiment of the solenoid valve according to the invention in override position;
Fig. 2 shows the adapter and override of fig. 1 separately;
Fig. 3 shows an assembly of the adapter of fig. 1 in perspective together with a variant override of the manual screw type;
Fig. 4 shows a variant of fig. 1 with the override of the manual screw type of fig. 3;
Fig. 5 shows a variant of fig. 1 with the adapter connected to the valve housing by means of a pin-groove connection;
Fig. 6 shows a side and cross-sectional view of a variant of fig. 1 with the override connected to the adapter by means of a quick snap connection;
Fig. 7 shows a side and cross-sectional view of a variant of fig. 1 with the override connected to the adapter by means of a bayonet connection;
Fig. 8a, b shows a variant of fig. 1 with the override of a lever-operated type in normal and override position respectively;
Fig. 9 shows the valves of fig. 1-4 with the various components separate from each other and showing the various options for coupling them together; and
Fig. 10 shows an embodiment with an explosion proof solenoid.

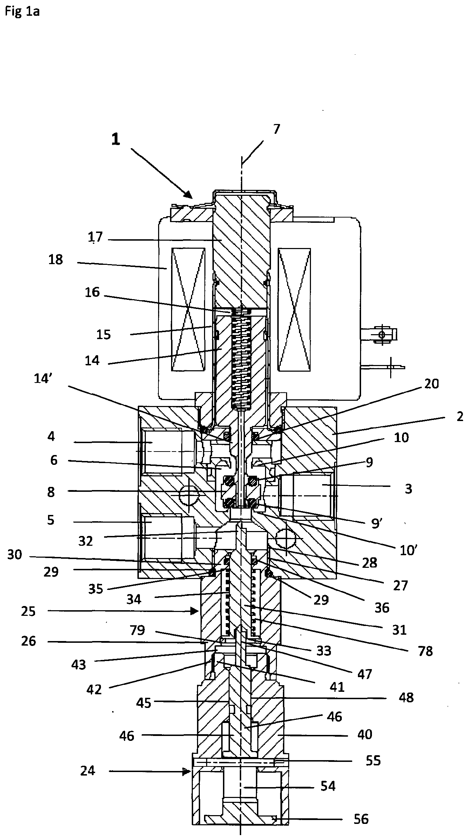

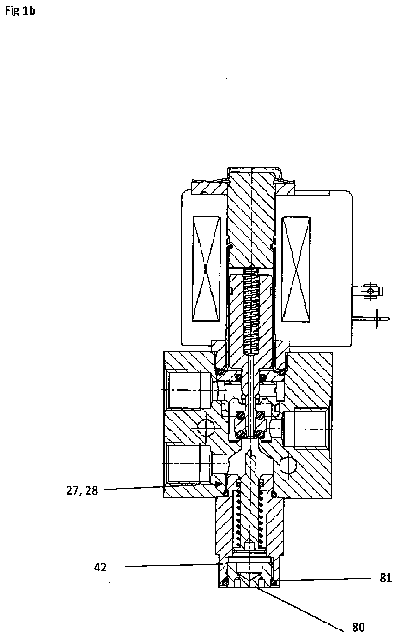

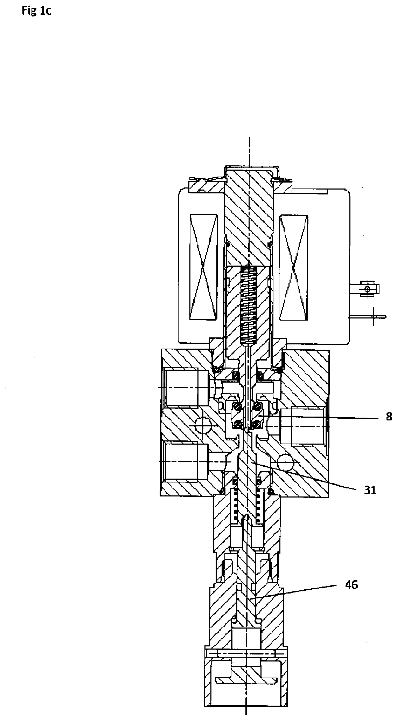

In fig. 1 the entire solenoid valve has been given the reference numeral 1. The valve 1 comprises a main valve housing 2 with ports 3, 4, 5. The ports may perform differing functions in dependence of the valve being closed or opened. For example in a so-called normally closed position NC, port 5 may form an inlet port, whereas port 3 forms an outlet port and port 4 forms an exhaust port. For example in a so-called normally open position NO, port 4 may form an inlet port, whereas port 3 forms an outlet port and port 5 forms an exhaust port. In another example the valve can be operated in two directions and the port 3 then may form an inlet port.

A bore 6 extends in a longitudinal direction 7 through the housing 2 and connects at respective positions to the ports 3-5. A valve poppet 8 is movable in the longitudinal direction 7 through the bore 6 between a first (starting) and second (end) position. The valve poppet 8 comprises two sealing rings 9, 9' which in the first and second position can come to lie sealing against complementary seats 10, 10' which delimit respective openings of the bores towards the respective ports 4, 5. In the first position, which is shown in fig. 1, the valve poppet 8 brings the port 3 in flow communication with the port 4 and at the same time closes it of from the port 5. In the second position, which is not shown in fig. 1, the valve poppet 8 can bring the port 3 in flow communication with the port 5 and at the same time close it of from the port 4.

The valve poppet 8 is fixedly connected to a stem part of a solenoid core 14. The core 14 is moveably guided in the longitudinal direction 7 inside a cylindrical sleeve 15 which is connected fixed and sealing to the housing 2. The core 14 and valve poppet 8 are biased towards the first position by means of a spring 16. Above the core 14 an electrically magnetisable solenoid base 17 is provided which is fixedly connected to the sleeve 15. The solenoid core 14 and solenoid base 17 form part of solenoid means 18. If the solenoid means 18 are fed with electricity, the base 17 gets magnetised and starts to exert a pulling force to the core 14, and thus is able to move the core 14 together with the valve poppet 8 connected thereto, towards the second position. Thus the valve poppet can be moved from its first position towards its second position. As soon as the solenoid means 18 are no longer energized, the core 14 no longer shall be attracted by the base 17 and the spring 16 shall cause the core 14 and valve poppet 8 to be pushed back to the first position again.

The bore 6 extends throughout the whole height of the housing 2. At the one outer end, in the situation shown the upper end, of the bore 6 the solenoid means 18 are sealingly mounted to the main valve housing 2 by means of suitable sealing connections. With this the movable core 14 of the solenoid means 18 is sealed relative to the bore 6 by means of a sealing ring 20 through which a piston part 14' of the core 14 is guided. Thus any pressurized medium, like fluids or gasses, can not escape from the valve 1 via the solenoid means 18.

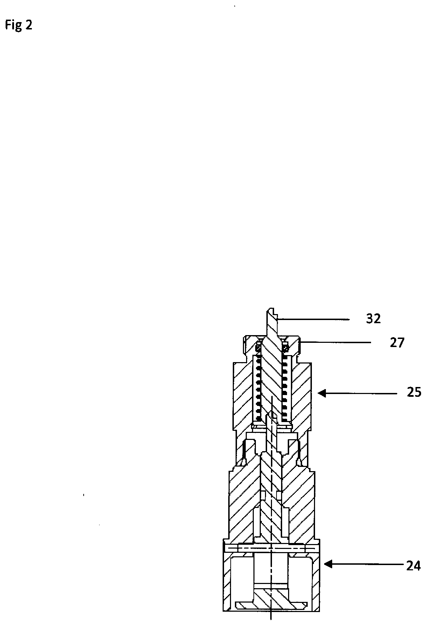

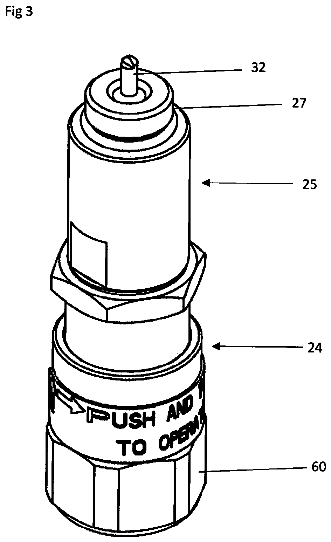

At the other outer end, in the situation shown the lower end, of the bore 6 an assembly of an override 24 and an adapter 25 is mounted. This assembly is shown in more detail in fig. 2 and 3.

The adapter 25 comprises an adapter housing part 26 which at its upper side is equipped with an outer threaded section 27 which is screwed into a complementary inner threaded section 28 of the bore 6. In order to obtain a sealing connection between the adapter housing part 26 and the main valve housing 2, an O-ring 29 is placed in a groove at the end of the threaded section 27.

The adapter housing part 26 delimits an adapter cylinder part 30 which is coaxial with the bore 6 and also extends in the longitudinal direction 7. Inside this cylinder part 30 an intermediate operator organ 31 is moveably guided. The operator organ 31 comprises a slender pin shaped tip 32, an enlarged flange part 33, and an adapter piston part 34. The pin shaped tip 32 is able to partly fit into and abut against an outer end of the assembly of the valve poppet 8 and core 14. A front end of the adapter piston part 34 is complementary to a front segment of the cylinder part 30 and is able to smoothly move therein in the longitudinal direction 7. A spring 78 between the adapter housing part 26 and the intermediate operator organ 31 biases the organ 31 towards a starting position in which it lies with its enlarged flange part 33 against a retainer ring 79. The spring 78 is placed around the adapter piston part 34 inside an enlarged segment of the adapter cylinder part 30. The retainer ring 79 is mounted inside a groove which is present inside said enlarged segment of the adapter cylinder part 30. In this way no medium pressure or spring in the valve is needed to let the intermediate operator organ 31 move back to it's original starting position.

In the position shown in fig. 1 the flange part 33 abuts against the retainer ring 79. This prevents the operator organ 31 to be pressed further into the cylinder part 30. From the position shown the operator organ 31 only has the freedom to move forward in the longitudinal direction 7. Between the operator organ 31 and the adapter housing part 26 an O-ring 36 is placed for maintaining a sealing engagement between them. The O-ring 36 in this case is placed in a groove which is present inside the front segment of the adapter cylinder part 30.

The override 24 comprises an override housing part 40 which at its upper side is equipped with an outer threaded section 41 which is screwed into a complementary inner threaded section 42 of a bore 43 inside the adapter housing part 26. In order to obtain an even further improved sealing connection between the override housing part 40 and the adapter housing part 26, an O-ring may be placed in a groove at the end of the threaded section 41.

The override housing part 40 delimits an override cylinder part 45 which is coaxial with the adapter cylinder part 30 as well as with the bore 6 and thus also extends in the longitudinal direction 7. Inside this cylinder part 45 a manually operable operator organ 46 is moveably guided. The operator organ 46 comprises a slender pin shaped tip 47 and an override piston part 48. The pin shaped tip 47 is able to partly fit into and abut and push against an outer end of the intermediate operator organ 31. The piston part 48 is complementary to the cylinder part 45 and is able to smoothly move therein in the longitudinal direction 7. In the position shown in fig. 1 a small clearance is present between the manually operable operator organ 46 and the intermediate operator organ 31. Between the operator organ 46 and the override housing part 40 an O-ring may be placed for maintaining an even further improved sealing engagement between them.

The operator organ 46 at its lower end part comprises a transverse slit 54 extending over a certain length in the longitudinal direction 7. A pin 55 extends in the transverse direction through the slit 54. The pin 55 is fixedly mounted to the override housing part 40. In the position shown in fig. 1 the pin 55 abuts against an end of the slit 54 and thus delimits a movement of the manually operable operator organ 46 in the outwards direction.

At its free lower end the operator organ 46 comprises a push button part 56. An operator has the option to push this button part 56 inwards until it abuts against an inner wall of the override housing part 40 or until the other end of the slit 54 abuts against the pin 55. See fig. 1c. With this inwards movement of the button part 56, the manually operable operator organ 46 starts to force the intermediate operator organ 31 to move along inwards as soon as they start abutting against each other. This in turn forces the valve poppet 8 to move along as soon as the intermediate operator organ 31 starts to abut against it. Thus the assembly of the override 24 and the adapter 25 together make it possible to manually move the valve poppet 8 against the action of the spring 16 towards its second position. It is not necessary to activate the solenoid means 18 for this. As soon as the button part 56 is loosened again, the springs 16 and 78 shall cause the valve poppet 8 and the operator organs 31 and 46 to move back again to their first and starting positions respectively.

If it is no longer desired to provide the solenoid valve 1 with the override functionality, the override 24 can simply be dismounted from the adapter 25 by unscrewing. See fig 1 b. The adapter 25 then can remain in place, that is to say can remain being sealingly connected to the main valve housing 2. Owing to the sealing connection between the adapter housing part 26 and the main valve housing 2 and the sealing engagement between the intermediate operator organ 31 and the adapter housing part 26, the bore 6 remains sealingly closed at the side of the connection with the adapter 25. Any pressurized or non-pressurized medium present inside the lower part of the bore 6, thus is unable to escape from the valve 1 via the side of the adapter 25. Should the bore 6 be filled with pressurized medium then the flange 33 prevents the intermediate operator organ 31 to be pressed out of the adapter housing part 26.

If desired a suitable cap, plug or the like 80 can be screwed into the threaded section 42 of the adapter 25 after the override 24 has been removed. In order to form a seal against dust and dirt, an O-ring 81 is placed between the cap 80 and the adapter housing part 26.

The threaded sections 27, 28 and 41, 42 are fully complementary to each other. This makes it possible for an engineer, if for whatever reason he prefers this, to dispense with the adapter 25 and to directly connect the override 24 with the main valve housing 2. Since the override 24 also has sealing means between its operator organ and housing, the override itself is also able to maintain a sealing connection with the valve 1.

It is only possible to safely screw either the adapter 25 either the override 24, or if desired even the mentioned cap, plug or the like 80 into the main valve housing 2, when the valve 1 is not under pressure. As soon as this is the case, and it is not desired or possible to take the pressure of the valve 1, then it is most advantageous if the adapter 24 is connected thereto, because only then it is possible to remove the override 24 without immediately causing a dangerous outburst of pressurized medium.

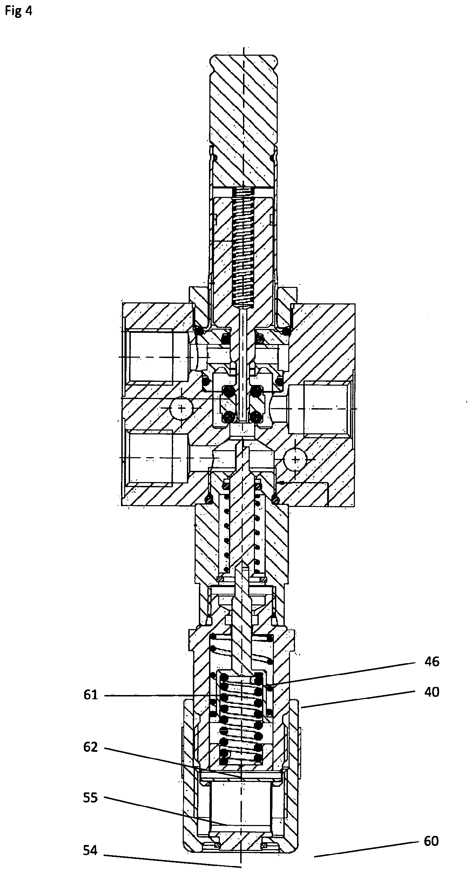

It is possible to connect another type of override with the adapter. One such variant is shown in fig. 4. Here the override no longer has a push button, but now is equipped with a rotation knob 60. Owing to a screw connection, the rotation knob 60 can only be rotated relative to the override housing part 40 while at the same time moving forward in the longitudinal direction. With this forward movement it pushes against the manually operable operator organ 46 and forces this to move along. In this case the operator organ 46 is biased relative to the housing part 40 by means of a first spring 61, while at the same time the knob 60 is biased relative to the operator organ 46 by means of a second spring 62. Like in the embodiment of fig. 1-2 a pin-slit connection 54, 55 again sets the boundaries for the freedom of movement of the knob 60.

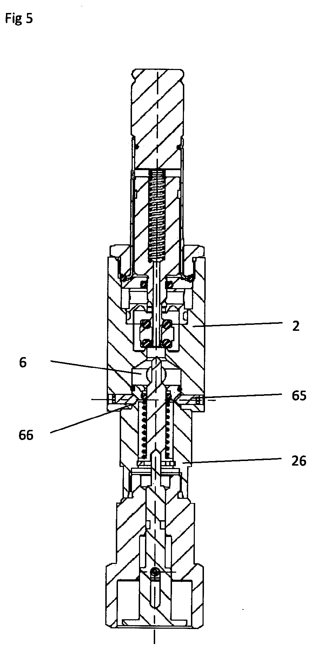

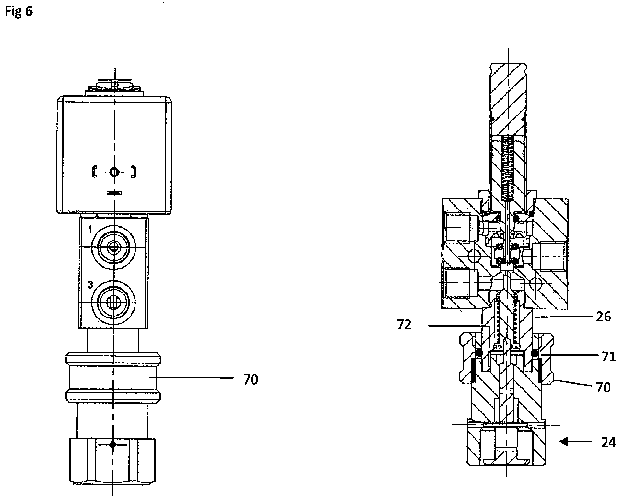

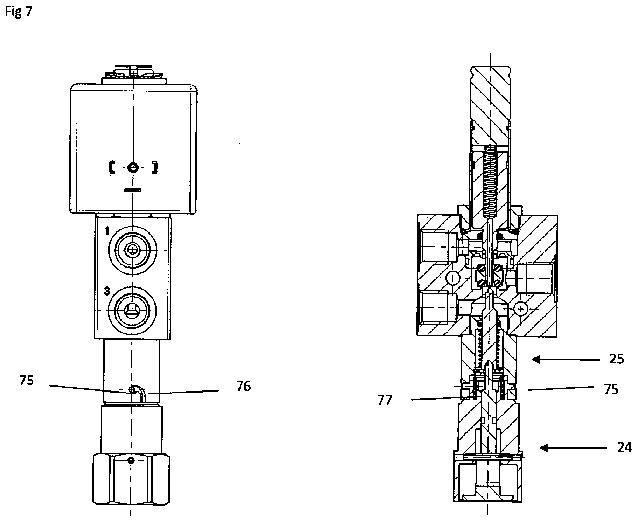

Instead of using a screw connections between the adapter and the valve housing and/or between the override and the adapter it is also possible to use other kinds of connections, like pin-groove connections (fig. 5), snapping connections (fig. 6), bayonet connections (fig. 7), etc.

For example fig. 5 shows an embodiment in which the front end of the adapter housing part 26 is simply slit into a complementary part of the bore 6 inside the main valve housing 2 and is kept in position therein by means of locking pins 65 screwed into the housing 2 and gripping onto the front end of the adapter housing part 26. The adapter housing part 26 is even provided with a suitable groove or openings 66 at its front end for the pins 65 to grip more stable into.

For example fig. 6 shows an embodiment in which the override 24 is provided with a backwards slidable biased ring 70 via which snapping ball bearings 71 can be released from gripping into complementary cut-outs 72 at the outer circumference of the adapter housing part 26. When released, the override 24 can be simply pulled of the adapter 25.

For example fig. 7 shows an embodiment in which the override 24 is provided with outwardly projecting pins 75 which can be placed into complementary bayonet shaped slits 76 which are provided into the adapter housing part 26. The override 24 can then be simply connected to the adapter 25 by placing the pins 75 into the slits 76 and then rotating them relative to each other until the pins 75 have reached the curved ends of the slits 76. A spring 77 is provided in between the adapter 25 and the override in order to keep the bayonet connection biased.

The adapter need not be provided with a spring to return the intermediate operator organ 31 to its original starting position. The pressure of the medium and the spring 16 behind the valve poppet 8 of the valve are also able to provide the force to move the organ 31 back to its original starting position. Further it is noted that between the operator organ 46 and the override housing part 40, an O-ring can be placed for maintaining a sealing engagement between them.

A retainer does not have to be present. Instead a front side wall part of the adapter housing part 26 can serve as blocking means against which a flange part of the organ 31 can abut.

Furthermore the override 24 itself can be provided with a spring which biases the manually operable operator organ in an outer direction.

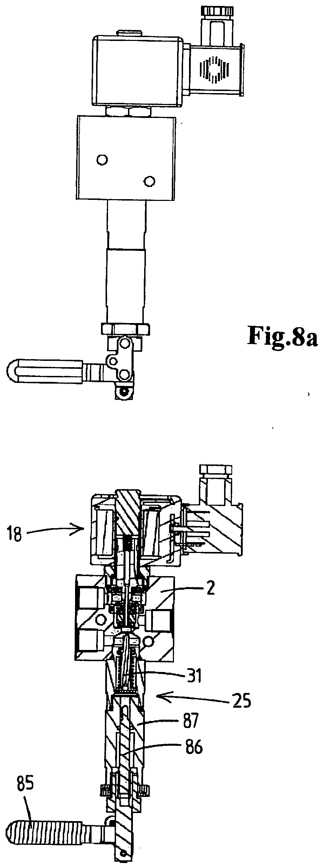

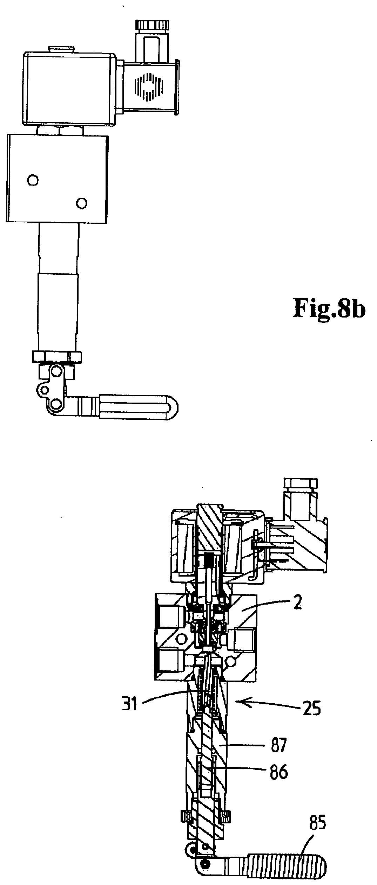

Fig. 8 shows an embodiment with yet another type of override connected with the adapter. Here the override comprises a lever 85 which can be manually moved between a normal position (fig. 8a) and an override position (fig. 8b). A flipping over of the lever 85 from the normal position to the override position at the same time moves an operating pin 86 inside a housing part 87 of the override forward in the longitudinal direction. With this forward movement it pushes against the intermediate operator organ 31 of the adapter 25 and forces this to move along together with the valve poppet. The lever type of override has the advantage that it is well able to stably stay in either one of the two positions, and that it gets clearly visible in which position it is placed. Also it is relative light to be manually operated.

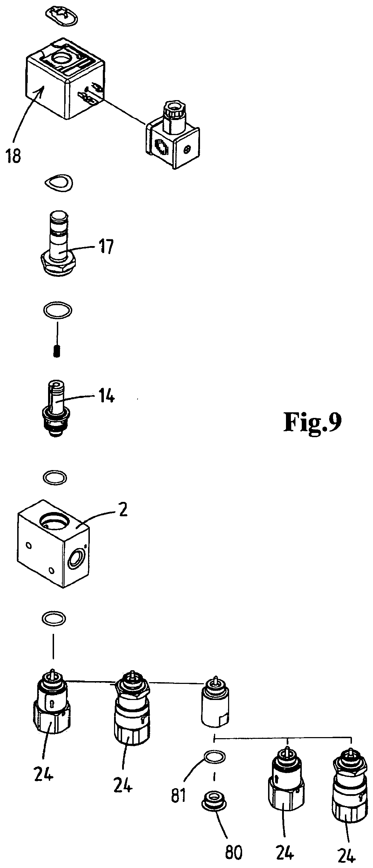

In order to make the assembly of the valve construction even more clear, fig. 9 shows a disassembled state for the valves of fig. 1-4. Here it can also be seen that a user has a choice to either first connect the adapter 25 either directly connect the override 24 of a certain desired type with the main valve housing 2, and that if it is the adapter 25 that has been connected to the main valve housing 2, that then the user has a choice to either connect the override 24 of a certain desired type either connect the cap 80 with the adapter 25.

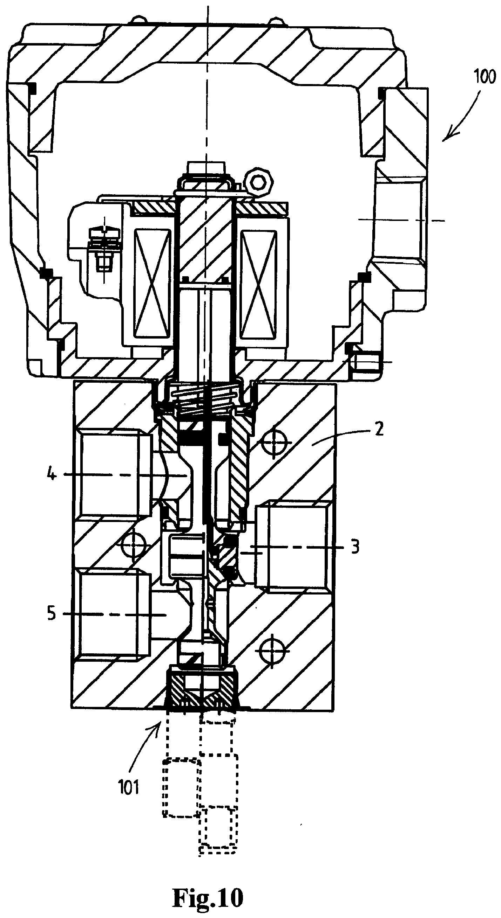

Fig. 10 shows that it is also possible to equip the valve with an explosion proof solenoid 100. With this it is noted that the solenoid 100 advantageously is provided at an opposite position of the main valve housing 2 relative to a mounting position 101 for connecting the adapter and/or override thereto.

Besides the embodiments shown numerous variants are possible. For example the various parts can be given different dimensions and can be made out of all kinds of materials. It is also possible to use two assemblies of adapters and overrides at opposite sides of the valve such that the valve poppet can be manually moved in both directions. Likewise it is also possible to use two sets of solenoid means at opposite sides of the valve such that the valve poppet can be moved under the influence of electro-magnetic forces in two directions. If desired the assembly of adapter and override can also be used on other types of solenoid valves, like ones having more or less inlet and outlet ports. The operator organs do not necessarily have to be placed in line with the longitudinal moving direction of the valve poppet. They can also be placed under a slight angle thereto, as long as they are able to exert a pushing force in the longitudinal direction against the valve poppet.

Thus according to the invention a multi-functional solenoid valve with removable override functionality is provided which gives both an engineer and an operator a lot of freedom during installation and operation since the override can be removed even with the valve being placed under pressure.

## Claims

1. A solenoid valve, comprising:
- a main valve housing (2) with at least an inlet and outlet port (3, 5) and a bore (6) extending there between, within which bore (6) a valve poppet (8) is moveable in a longitudinal direction (7) to control medium flow between the ports (3, 5) through the valve;
- electrically operable solenoid means (18) associated with the valve poppet (8) for moving the valve poppet (8) within the bore (6) in dependence of electricity being fed to the solenoid means (18); and
- a manual override (24) of the electrically operable solenoid means (18) for manually moving the valve poppet (8) in the longitudinal direction (7) within the bore (6) independent of the solenoid means (18),
in which the manual override (24) comprises an override housing part (40) within which a manually operable operator organ (46) is moveable while at the same time moving the valve poppet (8) along with it in the longitudinal direction (7),
an intermediate operator organ (31) being provided between the manual override (24) and the valve poppet (8), in which the manually operable operator organ (46), the intermediate operator organ (31) and the valve poppet (8) are associated to each other such that a manual operation of the manually operable operator organ (46) causes the intermediate operator organ (31) to move the valve poppet (8) in the longitudinal direction (7) to another position inside the bore (6) independent of the solenoid means (18),
**characterized in that,**
an adapter (25) is provided which comprises an adapter housing part (26) delimiting an adapter cylinder part (30) within which the intermediate operator organ (31) is moveable, wherein the adapter housing part (26) is sealingly connected to the main valve housing (2) with the bore (6) being in communication with the adapter cylinder part (30),
wherein the override housing part (40) is connected by means of a removable connection (41, 42) to the adapter housing part (26),
wherein first sealing means (36) are provided between the intermediate operator organ (31) and the adapter cylinder part (30) for preventing medium to flow out of the valve via the adapter (25),
wherein the adapter housing part (26) is connected by means of a removable connection (27, 28) to the main valve housing (2), with second sealing means (29) being provided between the adapter housing part (26) and the main valve housing (2).

2. A solenoid valve according to claim 1, wherein the removable connection (27, 28) between the adapter housing part (26) and the main valve housing (2) is a screw connection.

3. A solenoid valve according to claim 1 or 2, wherein the removable connection (41, 42) between the override housing part (40) and the adapter housing part (26) is complementary to the removable connection (27, 28) between the adapter housing part (26) and the main valve housing (2).

4. A solenoid valve according to one of the preceding claims, wherein the intermediate operator organ (31) comprises an adapter piston part (34) complementary to the adapter cylinder part (30), wherein the adapter piston part (34) or the adapter cylinder part (30) in particular comprises a circumferential groove inside which the first sealing means (36) are placed.

5. A solenoid valve according to one of the preceding claims, wherein the intermediate operator organ (31) comprises blocking means for blocking an outward movement away from the valve poppet (8) relative to the adapter housing part (26), wherein the blocking means in particular are formed by inwardly and/or outwardly projecting flange parts or a retainer which form cooperating abutting surfaces of the intermediate operator organ (31) and the adapter housing part (26).

6. A solenoid valve according to one of the preceding claims, wherein a plug (80) is provided which is connectable by means of a connection to the adapter housing part (26) after the override (24) has been removed, wherein the connection between the plug (80) and the adapter housing part (26) in particular is complementary to the removable connection (41, 42) between the override housing part (40) and the adapter housing part (26).

7. A solenoid valve according to one of the preceding claims, wherein the intermediate operator organ (31) is biased inside the adapter housing part (26) by means of a spring (78), wherein the intermediate operator organ (31) in particular is biased towards a starting position in a direction away from the solenoid means (18) and the valve poppet (8).

8. A solenoid valve according to one of the preceding claims, wherein, seen in the longitudinal direction (7), the solenoid means (18) are positioned at a first side of the valve poppet (8), and wherein the adapter (25) and override (24) are provided at a second side of the valve poppet (8) opposite to the solenoid means (18).

9. A solenoid valve according to one of the preceding claims, wherein the manually operable operator organ (46) is biased inside the override housing part (40) by means of a spring (61).

10. A solenoid valve according to one of the preceding claims, wherein the override housing part (40) delimits an override cylinder part (45) within which the manually operable operator organ (46) is moveable.

11. A solenoid valve according to one of the preceding claims, wherein the manually operable operator organ (46) comprises an override piston part (48) complementary to the override cylinder part (45), wherein the override piston part (48) or the override cylinder part (45) in particular comprises a circumferential groove inside which third sealing means are placed.

12. A solenoid valve according to one of the preceding claims, wherein the manually operable operator organ (46) comprises blocking means (54, 55) for blocking an outward movement away from the valve poppet (8) relative to the override housing part (40), wherein the blocking means (54, 55) in particular are formed by inwardly and/or outwardly projecting flange parts or a retainer which form cooperating abutting surfaces of the manually operable operator organ (46) and the override housing part (40).

13. A solenoid valve according to one of the preceding claims, wherein the override housing part (40) is connected by means of a screw connection or of a bayonet connection or of a snap connection to the adapter housing part (26).

14. A solenoid valve according to one of the preceding claims, wherein the solenoid means (18), after having been fed with electricity, are designed for (re)setting the valve poppet (8) in an aimed end position only after it first has been manually moved from out of a starting position towards said end position by a manual operation of the override (24).

15. Method for installing a machine which is equipped with at least one solenoid valve (1) according to one of the preceding claims, comprising the steps of:
- mounting the solenoid valve (1) including the adapter (25) and override (24) to the machine;
- placing the solenoid valve (1) under pressure of a medium;
- controlling and if necessary tuning the machine while manually operating the override (24); and
- removing the override (24) from the adapter (25) while keeping the solenoid valve (1) under pressure of the medium.

## Patentansprüche

1. Solenoidventil, umfassend:
- ein Hauptventilgehäuse (2) mit zumindest einer Einlass- und Auslassöffnung (3, 5) und einer Bohrung (6), die dort hindurch verläuft, wobei innerhalb der Bohrung (6) ein Ventilteller (8) in einer Längsrichtung (7) beweglich ist, um einen Mediumstrom zwischen den Öffnungen (3, 5) durch das Ventil zu steuern;
- elektrisch betreibbare Solenoidmittel (18), die dem Ventilteller (8) zugeordnet sind, zum Bewegen des Ventiltellers (8) in der Längsrichtung (7) innerhalb der Bohrung (6) in Abhängigkeit von Elektrizität, die den Solenoidmitteln (18) zugeführt wird; und
- einen manuellen Eingriff (24) der elektrisch betreibbaren Solenoidmittel (18) zum manuellen Bewegen des Ventiltellers (8) in der Längsrichtung (7) innerhalb der Bohrung (6) unabhängig von den Solenoidmitteln (18),
wobei der manuelle Eingriff (24) ein Eingriff-Gehäuseteil (40) umfasst, in dem ein manuell betreibbares Bedienerorgan (46) beweglich ist, während gleichzeitig der Ventilteller (8) damit in der Längsrichtung (7) bewegt wird,
wobei ein zwischenliegendes Bedienerorgan (31) zwischen dem manuellen Eingriff (24) und dem Ventilteller (8) vorgesehen ist, wobei das manuell betreibbare Bedienerorgan (46), das zwischenliegende Bedienerorgan (31) und der Ventilteller (8) einander derart zugeordnet sind, dass ein manueller Betrieb des manuell betreibbaren Bedienerorgans (46) bewirkt, dass das zwischenliegende Bedienerorgan (31) den Ventilteller (8) unabhängig von den Solenoidmitteln (18) in der Längsrichtung zu einer anderen Position innerhalb der Bohrung (6) bewegt,
**dadurch gekennzeichnet, dass**
ein Adapter (25) vorgesehen ist, das ein Adaptergehäuseteil (26) umfasst, welches ein Adapterzylinderteil (30) begrenzt, in dem das zwischenliegende Bedienerorgan (31) beweglich ist,
wobei das Adaptergehäuse (26) abdichtend mit dem Hauptventilgehäuse (2) verbunden ist, wobei die Bohrung (6) mit dem Adapterzylinderteil (30) in Verbindung steht,
wobei das Eingriff-Gehäuseteil (40) mithilfe einer lösbaren Verbindung (41, 42) mit dem Adaptergehäuseteil (26) verbunden ist,
wobei erste Dichtungsmittel (36) zwischen dem zwischenliegenden Bedienerorgan (31) und dem Adapterzylinderteil (30) vorgesehen sind, um zu verhindern, dass ein Medium über den Adapter (25) aus dem Ventil strömt,
wobei das Adaptergehäuseteil (26) mithilfe einer lösbaren Verbindung (27, 28) mit dem Hauptventilgehäuse (2) verbunden ist, wobei zweite Dichtungsmittel (29) zwischen dem Adaptergehäuseteil (26) und dem Hauptventilgehäuse (2) vorgesehen sind.

2. Solenoidventil nach Anspruch 1, wobei die lösbare Verbindung (27, 28) zwischen dem Adaptergehäuseteil (26) und dem Hauptventilgehäuse (2) eine Schraubverbindung ist.

3. Solenoidventil nach einem der Ansprüche 1 oder 2, wobei die lösbare Verbindung (41, 42) zwischen dem Eingriff-Gehäuseteil (40) und dem Adaptergehäuseteil (26) komplementär zur lösbaren Verbindung (27, 28) zwischen dem Adaptergehäuseteil (26) und dem Hauptventilgehäuse (2) ist.

4. Solenoidventil nach einem der vorhergehenden Ansprüche, wobei das zwischenliegende Bedienerorgan (31) ein Adapterkolbenteil (34) umfasst, das komplementär mit dem Adapterzylinderteil (30) ist, wobei das Adapterkolbenteil (34) oder das Adapterzylinderteil (30) insbesondere eine Umfangsnut umfasst, in der die ersten Dichtungsmittel (36) angeordnet sind.

5. Solenoidventil nach einem der vorhergehenden Ansprüche, wobei das zwischenliegende Bedienerorgan (31) Blockiermittel zum Blockieren einer Bewegung nach außen, weg vom Ventilteller (8) bezüglich des Adaptergehäuseteils (26) umfasst, wobei die Blockiermittel insbesondere durch nach innen und/oder nach außen vorstehende Flanschteile oder einen Halter ausgebildet sind, die zusammenwirkende Angrenzflächen des zwischenliegenden Bedienerorgans (31) und des Adaptergehäuseteils (26) ausbilden.

6. Solenoidventil nach einem der vorhergehenden Ansprüche, wobei ein Stecker (80) vorgesehen ist, der mithilfe einer Verbindung nach dem Entfernen des Eingriffs (24) mit dem Adaptergehäuseteil (26) verbindbar ist, wobei die Verbindung zwischen dem Stecker (80) und dem Adaptergehäuseteil (26) insbesondere komplementär zur lösbaren Verbindung (41, 42) zwischen dem Eingriff-Gehäuseteil (40) und dem Adaptergehäuseteil (26) ist.

7. Solenoidventil nach einem der vorhergehenden Ansprüche, wobei das zwischenliegende Bedienerorgan (31) innerhalb des Adaptergehäuseteils (26) mithilfe einer Feder (78) vorgespannt ist, wobei das zwischenliegende Bedienerorgan (31) insbesondere zu einer Anfangsposition in einer Richtung weg von den Solenoidmitteln (18) und dem Ventilteller (8) vorgespannt ist.

8. Solenoidventil nach einem der vorhergehenden Ansprüche, wobei die Solenoidmittel (18), bei Betrachtung in der Längsrichtung (7), an einer ersten Seite des Ventiltellers (8) angeordnet sind, und wobei der Adapter (25) und der Eingriff (24) an einer zweiten Seite des Ventiltellers (8) gegenüber den Solenoidmitteln (18) vorgesehen sind.

9. Solenoidventil nach einem der vorhergehenden Ansprüche, wobei das manuell betreibbare Bedienerorgan (46) innerhalb des Eingriff-Gehäuseteils (40) mithilfe einer Feder (61) vorgespannt ist.

10. Solenoidventil nach einem der vorhergehenden Ansprüche, wobei das Eingriff-Gehäuseteil (40) ein Eingriff-Zylinderteil (45) begrenzt, in dem das manuell betreibbare Bedienerorgan (46) beweglich ist.

11. Solenoidventil nach einem der vorhergehenden Ansprüche, wobei das manuell betreibbare Bedienerorgan (46) ein Eingriff-Kolbenteil (48) umfasst, das komplementär zum Eingriff-Zylinderteil (45) ist, wobei das Eingriff-Kolbenteil (48) oder das Eingriff-Zylinderteil (45) insbesondere eine Umfangsnut umfasst, in der dritten Dichtungsmittel angeordnet sind.

12. Solenoidventil nach einem der vorhergehenden Ansprüche, wobei das manuell betreibbare Bedienerorgan (46) Blockiermittel (54, 55) zum Blockieren einer Bewegung nach außen, weg vom Ventilteller (8) bezüglich des Eingriff-Gehäuseteils (40) umfasst, wobei die Blockiermittel (54, 55) insbesondere durch nach innen und/oder nach außen vorstehende Flanschteile oder einen Halter ausgebildet sind, die zusammenwirkende Angrenzflächen des manuell betreibbaren Bedienerorgans (46) und des Eingriff-Gehäuseteils (40) ausbilden.

13. Solenoidventil nach einem der vorhergehenden Ansprüche, wobei das Eingriff-Gehäuseteil (40) mithilfe einer Schraubverbindung oder einer Bajonettverbindung oder einer Schnappverbindung mit dem Adaptergehäuseteil (26) verbunden ist.

14. Solenoidventil nach einem der vorhergehenden Ansprüche, wobei die Solenoidmittel (18), nachdem ihnen Elektrizität zugeführt wurde, zum Einstellen/Rückstellen des Ventiltellers (8) in einer abgezielten Endposition nur nachdem es manuell aus einer Anfangsposition zur Endposition durch den manuellen Betrieb des Eingriffs (24) bewegt wurde, ausgelegt sind.

15. Verfahren zum Einrichten einer Maschine, die mit zumindest einem Solenoidventil (1) gemäß einem der vorhergehenden Ansprüche ausgestattet ist, die folgenden Schritte umfassend:
- Anbringen des Solenoidventils (1), das der Adapter (25) und den Eingriff (24) umfasst, an der Maschine;
- Anordnen des Solenoidventils (1) unter Druck eines Mediums;
- Steuern und bei Bedarf Abstimmen der Maschine während des manuellen Betätigen des Eingriffs (24); und
- Entfernen des Eingriffs (24) vom Adapter (25), während das Solenoidventil (1) unter Druck des Mediums gehalten wird.

## Revendications

1. Vanne électromagnétique comprenant :
un boîtier principal de vanne (2) avec des orifices d'entrée et de sortie (3, 5), et un alésage (6) s'étendant entre eux, à l'intérieur duquel alésage (6), un clapet de vanne (8) est mobile dans une direction longitudinale (7) pour réguler l'écoulement de milieu entre les orifices (3, 5) à travers la vanne ;
des moyens électromagnétiques (18) pouvant être actionnés électriquement, associés au clapet de vanne (8) pour déplacer le clapet de vanne (8) à l'intérieur de l'alésage (6) en fonction de l'électricité qui est fournie aux moyens électromagnétiques (18) ; et
un dispositif de neutralisation manuel (24) des moyens électromagnétiques (18) pouvant être actionnés électriquement pour déplacer manuellement le clapet de vanne (8) dans la direction longitudinale (7) à l'intérieur de l'alésage (6) indépendant des moyens électromagnétiques (18),
dans lequel le dispositif de neutralisation manuel (24) comprend une partie de logement de dispositif de neutralisation (40) à l'intérieur de laquelle un organe d'opérateur (46) pouvant être actionné manuellement peut se déplacer tout en déplaçant en même temps le clapet de vanne (8) conjointement avec ce dernier, dans la direction longitudinale (7),
un organe d'opérateur intermédiaire (31) qui est prévu entre le dispositif de neutralisation manuel (24) et le clapet de vanne (8), dans lequel l'organe d'opérateur (46) pouvant être actionné manuellement, l'organe d'opérateur intermédiaire (31) et le clapet de vanne (8) sont associés entre eux de sorte qu'une opération manuelle de l'organe d'opérateur (46) pouvant être actionné manuellement amène l'organe d'opérateur intermédiaire (31) à déplacer le clapet de vanne (8) dans la direction longitudinale (7) dans une autre position à l'intérieur de l'alésage (6) indépendant des moyens électromagnétiques (18),
**caractérisée en ce que :**
on prévoit un adaptateur (25) qui comprend une partie de logement d'adaptateur (26) délimitant une partie de cylindre d'adaptateur (30) à l'intérieur de laquelle l'organe d'opérateur intermédiaire (31) est mobile, dans laquelle la partie de logement d'adaptateur (26) est raccordée de manière étanche au boîtier principal de vanne (2) avec l'alésage (6) qui est en communication avec la partie de cylindre d'adaptateur (30),
dans laquelle la partie de logement de dispositif de neutralisation (40) est raccordée au moyen d'un raccordement amovible (41, 42) à la partie de logement d'adaptateur (26),
dans laquelle les premiers moyens d'étanchéité (36) sont prévus entre l'organe d'adaptateur intermédiaire (31) et la partie de cylindre d'adaptateur (30) pour empêcher le milieu de s'écouler à l'extérieur de la vanne via l'adaptateur (25),
dans laquelle la partie de logement d'adaptateur (26) est raccordée au moyen d'un raccordement (27, 28) au boîtier principal de vanne (2), avec des deuxièmes moyens d'étanchéité (29) qui sont prévus entre la partie de logement d'adaptateur (26) et le boîtier principal de vanne (2).

2. Vanne électromagnétique selon la revendication 1, dans laquelle le raccordement amovible (27, 28) entre la partie de logement d'adaptateur (26) et le boîtier principal de vanne (2) est un raccordement à vis.

3. Vanne électromagnétique selon la revendication 1 ou 2, dans laquelle le raccordement amovible (41, 42) entre la partie de logement de dispositif de neutralisation (40) et la partie de logement d'adaptateur (26) est complémentaire du raccordement amovible (27, 28) entre la partie de logement d'adaptateur (26) et le boîtier principal de vanne (2).

4. Vanne électromagnétique selon l'une des revendications précédentes, dans laquelle l'organe d'opérateur intermédiaire (31) comprend une partie de piston d'adaptateur (34) complémentaire de la partie de cylindre d'adaptateur (30), dans laquelle la partie de piston d'adaptateur (34) ou la partie de cylindre d'adaptateur (30) comprend en particulier une rainure circonférentielle à l'intérieur de laquelle les premiers moyens d'étanchéité (36) sont placés.

5. Vanne électromagnétique selon l'une des revendications précédentes, dans laquelle l'organe d'opérateur intermédiaire (31) comprend des moyens de blocage pour empêcher un mouvement vers l'extérieur à distance du clapet de vanne (8) par rapport à la partie de logement d'adaptateur (26), dans laquelle les moyens de blocage sont formés, en particulier, par des parties de bride faisant saillie vers l'intérieur et/ou vers l'extérieur ou un dispositif de retenue qui forment des surfaces de butée coopératives de l'organe d'opérateur intermédiaire (31) et de la partie de boîtier d'adaptateur (26).

6. Vanne électromagnétique selon l'une des revendications précédentes, dans laquelle on prévoit un bouchon (80) qui peut être raccordé au moyen d'un raccordement à la partie de logement d'adaptateur (26) après que le dispositif de neutralisation (24) a été retiré, dans laquelle le raccordement entre le bouchon (80) et la partie de logement d'adaptateur (26) est, en particulier, complémentaire du raccordement amovible (41, 42) entre la partie de logement de dispositif de neutralisation (40) et la partie de logement d'adaptateur (26).

7. Vanne électromagnétique selon l'une des revendications précédentes, dans laquelle l'organe d'opérateur intermédiaire (31) est sollicité à l'intérieur de la partie de logement d'adaptateur (26) au moyen d'un ressort (78), dans laquelle l'organe d'opérateur intermédiaire (31) est sollicité, en particulier, vers une position de départ dans une direction à distance des moyens électromagnétiques (18) et du clapet de vanne (8).

8. Vanne électromagnétique selon l'une des revendications précédentes, dans laquelle, observés dans la direction longitudinale (7), les moyens électromagnétiques (18) sont positionnés d'un premier côté du clapet de vanne (8) et dans laquelle l'adaptateur (25) et le dispositif de neutralisation (24) sont prévus d'un second côté du clapet de vanne (8) opposé aux moyens électromagnétiques (18).

9. Vanne électromagnétique selon l'une des revendications précédentes, dans laquelle l'organe d'opérateur (46) pouvant être actionné manuellement est sollicité à l'intérieur de la partie de logement de dispositif de neutralisation (40) au moyen d'un ressort (61).

10. Vanne électromagnétique selon l'une des revendications précédentes, dans laquelle la partie de logement de dispositif de neutralisation (40) délimite une partie de cylindre de dispositif de neutralisation (45) à l'intérieur de laquelle l'organe d'opérateur (46) pouvant être actionné manuellement peut se déplacer.

11. Vanne électromagnétique selon l'une des revendications précédentes, dans laquelle l'organe d'opérateur (46) pouvant être actionné manuellement comprend une partie de piston de dispositif de neutralisation (48) complémentaire de la partie de cylindre de dispositif de neutralisation (45), dans laquelle la partie de piston de dispositif de neutralisation (48) ou la partie de cylindre de dispositif de neutralisation (45) comprend, en particulier, une rainure circonférentielle à l'intérieur de laquelle des troisièmes moyens d'étanchéité sont placés.

12. Vanne électromagnétique selon l'une des revendications précédentes, dans laquelle l'organe d'opérateur (46) pouvant être actionné manuellement comprend des moyens de blocage (54, 55) pour empêcher un mouvement vers l'extérieur à distance du clapet de vanne (8) par rapport à la partie de logement de dispositif de neutralisation (40), dans laquelle les moyens de blocage (54, 55) sont formés, en particulier, par des parties de bride en saillie vers l'intérieur et/ou vers l'extérieur ou un dispositif de retenue qui forment des surfaces de butée coopératives de l'organe d'opérateur (46) pouvant être actionné manuellement et de la partie de logement de dispositif de neutralisation 40).

13. Vanne électromagnétique selon l'une des revendications précédentes, dans laquelle la partie de logement de dispositif de neutralisation (40) est raccordée au moyen d'un raccordement de vis ou d'un raccordement à baïonnette ou d'un raccordement à encliquetage, à la partie de logement d'adaptateur (26).

14. Vanne électromagnétique selon l'une des revendications précédentes, dans laquelle les moyens électromagnétiques (18), après avoir été alimentés avec l'électricité, sont conçus pour (ré)initialiser le clapet de valve (8) dans une position de fin visée, uniquement après qu'il a été tout d'abord déplacé manuellement de l'extérieur de la position de départ vers ladite position de fin par une opération manuelle du dispositif de neutralisation (24).

15. Procédé pour installer une machine qui est équipée avec au moins une vanne électromagnétique (1) selon l'une des revendications précédentes, comprenant les étapes consistant à :
monter la vanne électromagnétique (1) comprenant l'adaptateur (25) et le dispositif de neutralisation (24) sur la machine ;
placer la vanne électromagnétique (1) sous pression d'un milieu ;
réguler et si nécessaire accorder la machine tout en actionnant manuellement le dispositif de neutralisation (24) ; et
retirer le dispositif de neutralisation (24) de l'adaptateur (25) tout en maintenant la vanne électromagnétique (1) sous pression du milieu.
